# EUROPÄISCHE PATENTSCHRIFT

(11) **EP 4 227 154 B1**
(45) Veröffentlichungstag und Bekanntmachung des Hinweises auf die Patenterteilung: **29.05.2024**
(21) Anmeldenummer: 23171425.4
(22) Anmeldetag: 24.03.2020
(51) Int. Cl.: B60N 2/90

(54) **PULSATIONSMODUL, LUFTKISSENANORDNUNG FÜR EINEN SITZ, WIE ETWA EINEN FAHRZEUGSITZ**
PULSATION MODUL, AIR CUSHION ASSEMBLY FOR A SEAT, SUCH AS A VEHICLE SEAT
MODULE DE PULSATION, AGENCEMENT DE COUSSIN D'AIR POUR UN SIÈGE, TEL QU'UN UN SIÈGE DE VÉHICULE

(30) Priorität: 22.05.2019 DE 102019113629
(43) Veröffentlichungstag der Anmeldung: 16.08.2023
(62) Teilanmeldung aus: 20713881.9
(73) Patentinhaber: Gentherm Präzision SE, 91757 Treuchtlingen (DE)
(72) Erfinder: DÖRFLER, Erich, 86899 Landsberg (DE); AUERNHAMMER, Helmut, 91798 Höttingen (DE); BAUMGARTL, Jürgen, 91757 Treuchtlingen (DE); SCHERB, Michael, 91722 Arberg (DE)
(74) Vertreter: Knoke, Isabel Yvonne

(56) Entgegenhaltungen:
- EP-A1- 3 124 320
- DE-T5-112014 005 575
- JP-A- 2005 168 953
- US-A1- 2010 289 302
- US-A1- 2018 370 405

## Beschreibung

Die vorliegende Erfindung betrifft eine Luftkissenanordnung für einen Sitz, wie etwa einen Fahrzeugsitz umfassend wenigstens ein Luftkissen und ein Luftversorgungssystem zum variablen Beaufschlagen der Luftkissen der Luftkissenanordnung mit Luft, wobei jeweils eine ein absperrbares Ventil umfassende Versorgungsleitung von dem Luftversorgungssystem zu jedem Luftkissen führt, wobei ein Pulsationsmodul vorgesehen ist, das ausgebildet ist, jedes Luftkissen mit einer Pulsation zu beaufschlagen, wobei das Pulsationsmodul ein mit wenigstens einer Versorgungsleitung druckausgeglichen verbundenes Pneumatik-Element und ein Betätigungselement zum Übertragen einer mechanischen Bewegung auf das Pneumatik-Element zum Verändern des Volumens des Pneumatik-Elements zur Erzeugung einer Pulsation umfasst. Die Erfindung betrifft weiterhin einen Sitz, etwa einen Fahrzeugsitz, umfassend eine entsprechende Luftkissenanordnung. Insbesondere betrifft die Erfindung ein Pulsationsmodul.

### Stand der Technik

Aus dem Stand der Technik sind Luftkissenanordnungen für Fahrzeugsitze und auch andere Sitze, wie etwa Massagesessel, hinreichend bekannt.

Ganz allgemein offenbart etwa die DE 10 2011 079 712 A1 eine pneumatische Einrichtung zum Erzeugen und Übertragen von Druckschwingungen über ein Luftkissen auf den menschlichen Körper. Hier ist ein Druckerzeuger, umfassend eine Schwingankermembranpumpe, vorgesehen, die eine Vibration oder Pulsation durch Änderung der Druckverhältnisse in dem Luftkissen aufbauen und diese so an den Menschen übertragen kann. Zum Erzeugen einer geringfügigen Schwingung des Druckniveaus ist ein Drosselventil vorgesehen, das etwa mit regelmäßiger Frequenz durch Ablassen von Luft eine zyklische Pulsation des Druckverlaufs in der Druckleitung des Luftkissens bewirkt.

Aus dem Stand der Technik sind auch grundsätzlich Fahrzeugsitze mit Massagefunktionen bekannt, bei denen die jeweiligen Luftkissen des mit der Massagefunktion ausgestatteten Sitzes abwechselnd mit Luft beaufschlagt und abwechseln (zumindest teilweise) entlüftet werden, wobei hierzu eine entsprechende entweder zentrale oder separate Luftversorgung für jedes Luftkissen vorgesehen sein kann. JP 2005 168953 offenbart ein System mit Luftkissen.

Die beschriebenen mechanischen Systeme sind jedoch vergleichsweise träge und erlauben damit nur relativ geringe Frequenzen, was für den Menschen unangenehm sein kann bzw. die eigentliche Massagewirkung nicht ausreichend realisiert. Ausgehend vom bekannten Stand der Technik besteht die zu lösende technische Aufgabe somit darin, eine Luftkissenanordnung für einen Sitz anzugeben, mit der eine Pulsation auch mit hoher Frequenz dem Druckniveau der Luftkissen in der Luftkissenanordnung überlagert werden kann. Weiterhin besteht die Aufgabe in der Angabe eines Pulsationsmoduls.

Diese Aufgabe wird durch das Pulsationsmodul nach Anspruch 1 gelöst.

Diese Aufgabe wird durch die Luftkissenanordnung für einen Sitz, wie etwa einen Fahrzeugsitz umfassend wenigstens ein Luftkissen und ein Luftversorgungssystem zum variablen Beaufschlagen der Luftkissen der Luftkissenanordnung mit Luft, wobei jeweils eine ein absperrbares Ventil umfassende Versorgungsleitung von dem Luftversorgungssystem zu jedem Luftkissen führt, wobei ein Pulsationsmodul vorgesehen ist, das ausgebildet ist, jedes Luftkissen mit einer Pulsation zu beaufschlagen, wobei das Pulsationsmodul ein mit wenigstens einer Versorgungsleitung druckausgeglichen verbundenes Pneumatik-Element und ein Betätigungselement zum Übertragen einer mechanischen Bewegung auf das Pneumatik-Element zum Verändern des Volumens des Pneumatik-Elements zur Erzeugung einer Pulsation umfasst sowie den Sitz, etwa einen Fahrzeugsitz, umfassend eine entsprechende Luftkissenanordnung gelöst. Vorteilhafte Weiterbildungen der Erfindung sind in den Unteransprüchen erfasst.

Die erfindungsgemäße Luftkissenanordnung für einen Sitz, wie etwa einen Fahrzeugsitz, umfasst wenigstens ein Luftkissen und ein Luftversorgungssystem zum variablen Beaufschlagen der Luftkissen der Luftkissenanordnung mit Luft, wobei jeweils eine ein absperrbares Ventil umfassende Versorgungsleitung von dem Luftversorgungssystem zu jedem Luftkissen führt, wobei ein Pulsationsmodul vorgesehen ist, das ausgebildet ist, jedes Luftkissen mit einer Pulsation zu beaufschlagen, wobei das Pulsationsmodul ein mit wenigstens einer Versorgungsleitung druckausgeglichen verbundenes Pneumatik-Element und ein Betätigungselement zum Übertragen einer mechanischen Bewegung auf das Pneumatik-Element zum Verändern des Volumens des Pneumatik-Elements zur Erzeugung einer Pulsation umfasst.

Erfindungsgemäß ist insbesondere vorgesehen, dass das Pulsationsmodul getrennt von dem eigentlichen Luftversorgungssystem vorgesehen ist. Dies kann beispielsweise dadurch realisiert sein, dass in der Versorgungsleitung zum einen ein Einlass für die durch das Luftversorgungssystem eingebrachte Luft und damit eine Verbindung zu dem absperrbaren Ventil vorgesehen ist und unabhängig von diesem Einlass ein zweiter Einlass vorgesehen ist, der druckausgeglichen mit dem Pneumatik-Element des Pulsationsmoduls verbunden ist. Ein weiterer Ausgang führt dann zu dem jeweiligen Luftkissen.

Die druckausgeglichene Verbindung zwischen dem Pneumatik-Element und der Versorgungsleitung ist hier so zu verstehen, dass sich bei einer inaktiven Stellung des Betätigungselements (bei der keine oder eine minimale mechanische Kraft auf das Pneumatik-Element wirkt) in dem Pneumatik-Element stets derselbe Druck einstellt, der auch in der Versorgungsleitung vorherrscht. Wird das Betätigungselement betätigt, so führt dies zu einer Druckveränderung im Pneumatik-Element, die sich aufgrund der druckausgeglichenen Verbindung des Pneumatik-Elements mit der Versorgungsleitung dann auch in die Versorgungsleitung überträgt.

Ganz grundsätzlich ist das Pneumatik-Element als ein solches Element vorgesehen, das ein Luftvolumen aufnehmen kann, etwa in einem im Wesentlichen vollständig umschlossenen Innenraumvolumen des Pneumatik-Elements. Weiterhin ist das Pulsationsmodul derart ausgestaltet, dass das Betätigungselement und das Pneumatik-Element derart Zusammenwirken können, dass die Luftmenge im Pneumatik-Element verändert werden kann, etwa periodisch verändert werden kann.

Dazu bewirkt die mechanische Bewegung des Betätigungselements bevorzugt eine Veränderung der Form und/oder des Volumens des Pneumatik-Elements.

Diese Luftkissenanordnung erlaubt auch hochfrequente Schwingungen (im Sinne der Erfindung bedeutet dies: > 1 Hz, vorzugsweise 3 - 100 Hz, weiter bevorzugt 60 - 80 Hz) und erfordert gleich zeitig nicht länger die Nutzung des Luftversorgungssystems mit den entsprechenden absperrbaren Ventilen zum Erzeugen der Pulsation, sodass auch bei gleichbleibenden Druckverhältnissen in der Versorgungsleitung bzw. konstanter Luftmenge in der Versorgungsleitung bei abgesperrten Ventilen eine Pulsation zuverlässig erzeugt werden kann.

Es kann vorgesehen sein, dass jedes Pneumatik-Element mit genau einer Versorgungsleitung verbunden ist. Mit dieser Ausführungsform wird eine variable und für jedes Luftkissen separat vorsehbare Steuerung der Pulsation realisiert.

Weiterhin kann das Betätigungselement die Pneumatik-Elemente unabhängig voneinander betätigen. Dies erlaubt auch unterschiedliche Frequenzen und/oder Phasen und/oder Amplituden der Pulsationen, die an die einzelnen Luftkissen übertragen werden.

In einer Ausführungsform umfasst das Pneumatik-Element ein Luftkissen. Das Luftkissen des Pneumatik-Elements kann auch als Pneumatik-Kissen bezeichnet werden. Dabei handelt es sich um ein weiteres Luftkissen und nicht um das Luftkissen, das über die Versorgungsleitung mit dem Pneumatik-Element verbunden ist. Luftkissen können kostengünstig hergestellt werden und weisen eine lange Lebensdauer auf, auch bei hochfrequenter Belastung.

Jedem Pneumatik-Element kann ein unabhängiges Betätigungselement zugeordnet sein. Damit ist auch gewährleistet, dass die einzelnen Betätigungsargumente auch mechanisch unabhängig voneinander gesteuert werden können.

Es kann vorgesehen sein, dass das Pneumatik-Element ein Luftkissen mit einem Innenraumvolumen, das mit der Versorgungsleitung druckausgeglichen verbunden ist, umfasst und das Betätigungselement ausgebildet ist, das Innenraumvolumen des Luftkissens durch mechanische Einwirkung zum Beaufschlagen des Luftkissens mit einer Pulsation zu verändern; oder es kann vor gesehen sein, dass das Pneumatik-Element aus einer flexiblen Membran und dem Betätigungselement sowie einem Arbeitsraum gebildet wird, wobei die flexible Membran, das Betätigungselement und der Arbeitsraum gemeinsam ein Innenraumvolumen des Pneumatik-Elements, das mit der Versorgungsleitung druckausgeglichen verbunden ist, begrenzen und wobei das Betätigungselement ausgebildet ist, durch mechanische Bewegung das Innenraumvolumen zum Beaufschlagen des Luftkissens mit einer Pulsation zu verändern.

In der ersten Alternative wird das Luftkissen etwa durch die Tätigkeit des Betätigungselements zusammengedrückt und/oder deformiert, sodass ein Teil der in dem Luftkissen befindlichen Luft zusätzlich in die Versorgungsleitung gedrückt wird, da das zur Verfügung stehende Volumen sich ändert bzw. verringert. Damit kann die Pulsation bewirkt werden. In der zweiten Alternative ist das Betätigungselement Teil des Pneumatik-Elements, was die unmittelbare Übertragung der mechanischen Bewegung des Pneumatik-Elements in eine Druckveränderung in dem Gesamtsystem bewirkt. Beide Ausführungsformen gestatten hochfrequente Pulsationen in dem Luftkissen der Luftkissenanordnung.

Das Betätigungselement kann zum gegenphasigen Betätigen mehrerer Pneumatik-Elemente aus gebildet sein. Eine gegenphasige Pulsation in den einzelnen Pneumatik-Elementen kann, etwa bei der Realisierung einer Massagefunktion mit der Luftkissenanordnung, für einen Fahrgast an genehmer wirken.

Es kann vorgesehen sein, dass das Betätigungselement einen Schwenkarm umfasst, der um einen Winkel um eine Achse verschwenkbar ist, wobei auf gegenüberliegenden Seiten des Schwenkarms jeweils wenigstens ein Pneumatik-Element angeordnet ist; oder dass das Betätigungselement linear entlang einer Betätigungsstrecke bewegbar angeordnet ist, wobei auf gegenüberliegenden Seiten des Betätigungselements jeweils wenigstens ein Pneumatik-Element angeordnet ist.

Diese Realisierung des Betätigungselements ist mechanisch robust, sodass Fehlfunktionen selten auftreten werden.

In einer Ausführungsform ist vorgesehen, dass das Pulsationsmodul einen Zylinder umfasst, in dessen Innenraum Pneumatik-Elemente mit einem mit der Versorgungsleitung druckausgeglichen verbundenen Innenraumvolumen konzentrisch angeordnet sind, wobei das Betätigungselement eine exzentrisch zum Zylinder innerhalb des Zylinders angeordnete Walze umfasst, wobei die Pneumatik-Elemente und das Betätigungselement derart angeordnet sind, dass eine exzentrische Bewegung der Walze um die Längsachse des Zylinders das Innenraumvolumen der Pneumatik- Elemente zum Beaufschlagen des Luftkissens mit einer Pulsation verändern kann.

Mit dieser Ausführungsform ist es möglich, die Pneumatik-Elemente versetzt zueinander (also mit einer zeitlichen Verzögerung) periodisch zu betätigen, wobei gleichzeitig die Anzahl der notwendigen Betätigungselemente reduziert werden kann.

In einer Weiterbildung dieser Ausführungsform ist eine Kontaktfläche zwischen der Walze und den Pneumatik-Elementen mit einem Schmiermittel beaufschlagt und/oder die Pneumatik-Elemente bestehen aus TPU-Folie oder die Kontaktfläche mit der Walze umfasst TPU-Folie. Diese Ausgestaltung verbessert die mittlere Lebensdauer der gesamten Anordnung.

Es kann vorgesehen sein, dass eine Naht der Pneumatik-Elemente mit der Achse des Zylinders und/oder der Drehachse der Walze einen Winkel einschließt. Auch durch diese Ausführungsform wird die Langlebigkeit der Anordnung erhöht.

Bevorzugt kann die Walze über ein Getriebe mit einem Antriebselement verbunden sein. So kann eine periodische Bewegung des Antriebselements in eine geeignete, gegebenenfalls niedrigere oder auch höhere Bewegungsfrequenz der Walze überführt werden.

In einer Weiterbildung ist dabei vorgesehen, dass das Antriebselement ein Elektromotor ist und wobei eine Steuereinheit voresehen ist, die den Elektromotor zum Steuern einer Drehfrequenz des Elektromotors ansteuern kann. Diese Ausführungsform ist besonders vorteilhaft für die Verwendung in Fahrzeugen.

Es kann vorgesehen sein, dass die Luftkissenanordnung ein Antriebselement für das Betätigungselement umfasst, wobei das Antriebselement ausgebildet ist, eine Pulsation mit einer Frequenz von 1 Hz bis 1000Hz oder 3Hz bis 100Hz oder 60Hz bis 80Hz oder zwischen 5 und 20Hz, insbesondere zwischen 5 und 15Hz, besonders bevorzugt zwischen 7 und 12Hz zu bewirken; und/oder die Luftkissenanordnung ausgebildet ist, eine Massagefunktion und/oder eine Entertainmentfunktion und/oder eine Line-Assist-Funktion und/oder eine Fahrspurwechselwarnfunktion zu realisieren.

Die gemäß dieser Ausführungsform vorgesehenen Pulsationsfrequenzen wirken insbesondere bei Realisierungen von Massagefunktionen für den Menschen angenehm. Die Verwendung der Luftkissenanordnung zur Ausgestaltung einer Massagefunktion und der anderen in dieser Aus führungsform genannten Funktionen kann auf für den Menschen angenehme Weise realisiert werden, da durch die zusätzliche Pulsation auf den menschlichen Körper eine auch bei längeren Fahrten nicht störende Druckwirkung ausgeübt wird.

Erfindungsgemäß ist weiterhin ein Sitz, etwa ein Fahrzeugsitz, umfassend eine Luftkissenanordnung nach einer der vorangegangenen Ausführungsformen und optional ein Lordosestützsystem vorgesehen. Die Implementierung der Luftkissenanordnungen in einem Fahrzeugsitz ist eine besonders bevorzugte Ausführungsform der Erfindung und erlaubt einen platzsparenden Einbau. Kurze Beschreibung der Figuren
- Fig. 1: zeigt eine schematische Darstellung einer Luftkissenanordnung gemäß einer Ausführungsform
- Fig. 2a - c: zeigen verschiedene Ausführungsformen der Realisierung des Betätigungselements
- Fig. 3: zeigt eine weitere Ausführungsform des Betätigungselements
- Fig. 4: zeigt eine Ausführungsform des Betätigungselements als Schwenkarm
- Fig. 5: zeigt eine weitere Ausführungsform des Betätigungselements
- Fig. 6: zeigt eine Realisierung des Getriebes zwischen Antriebsmotor und Pulsationselement

### Ausführliche Beschreibung

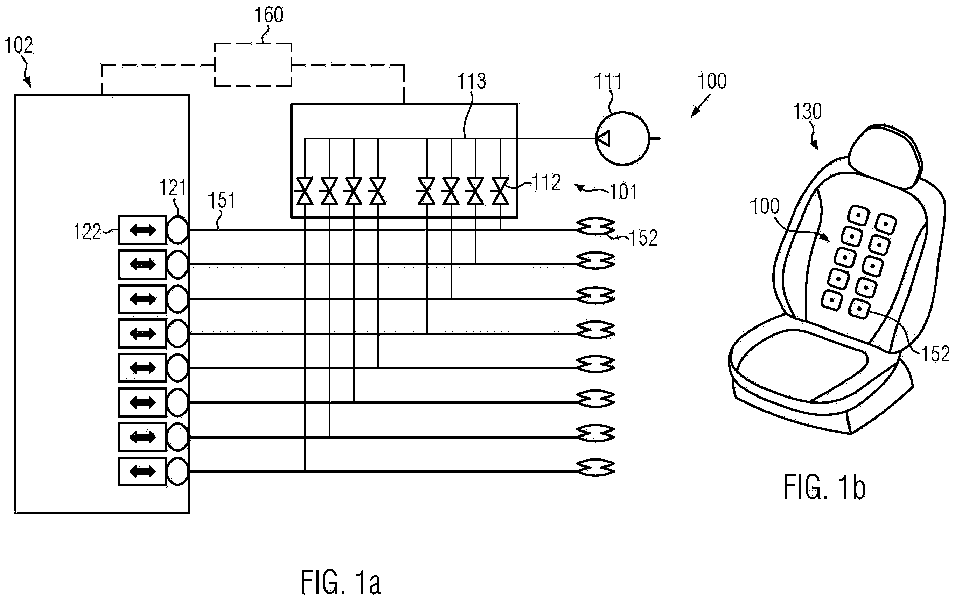

Fig. 1a und b zeigen schematische Darstellungen einer Ausführungsform der erfindungsgemäßen Luftkissenanordnung 100. In der in Fig. 1 dargestellten Ansicht ist die Luftkissenanordnung 100 schematisch gezeigt. Die Fig. 1 b zeigt schematisch den Einbau der Luftkissenanordnung 100 und einzelne Luftkissen 152 der Luftkissenanordnung in einem Sitz 130, insbesondere einem Fahrzeugsitz für einen PKW oder LKW oder ähnliches Fahrzeug.

Die erfindungsgemäße Luftkissenanordnung 100 ist grundsätzlich dazu gedacht, ein oder mehrere Luftkissen 152 der Luftkissenanordnung 100 mit Luft zu beaufschlagen und zusätzlich eine Pulsation des jeweiligen Luftkissens 152 zu realisieren. Dabei ist es nicht notwendig, dass die einmal in das Luftkissen 152 eingebrachte Luft bei (bis auf die Pulsation) gleichbleibendem Druck im Luftkissen 152 verbleibt. Es kann auch vorgesehen sein, dass die in das Luftkissen eingebrachte Luft über längere Zeiträume (deren Frequenz insbesondere länger ist als die Pulsation) teilweise oder vollständig wieder aus dem Luftkissen entfernt oder wieder hineingeleitet wird.

Insbesondere muss das Beaufschlagen des Luftkissens 152 mit Luft nicht zwingend periodisch erfolgen. Denkbar sind Anwendungen der Luftkissenanordnung etwa zum Erreichen einer Massagefunktion. In diesem Fall erfolgt ein periodisches Beaufschlagen des Luftkissens 152 mit Luft und ein (vollständiges oder zumindest teilweises) Ablassen der gesamten Luft aus dem Luftkissen, um eine Massagewirkung etwa an einzelnen Stellen des Rückens oder der Beine des Fahrzeuginsassens oder allgemein des auf dem Sitz 130 gemäß der Fig. 1 b sitzenden Menschen zu bewirken.

Zum Beaufschlagen der Luftkissen 152 mit Luft ist ein Luftversorgungssystem 101 vorgesehen. Dieses Luftversorgungssystem umfasst etwa eine Druckversorgung 1 11 in Form einer Pumpe, von der aus eine oder mehrere Leitungen 113 zu absperrbaren Ventilen 112 führen. Die Erfindung ist hinsichtlich der Ausgestaltung der Pumpe nicht beschränkt und es können insbesondere Ausführungsformen angedacht sein, die bereits für Massagesitze in Fahrzeugen übliche Pumpen verwenden.

Die absperrbaren Ventile wiederum sind jeweils über eine separate Versorgungsleitung 151 mit jeweils einem Luftkissen 152 verbunden. Dies bedeutet insbesondere, dass ein erstes absperrbares Ventil 112 mit einer ersten Versorgungsleitung 151 verbunden ist und diese Versorgungsleitung 151 zu genau einem Luftkissen 152 führt. Ein zweites absperrbares Ventil ist dann mit einer zweiten Versorgungsleitung und darüber mit einem zweiten Luftkissen verbunden. Dies erlaubt durch geeignete Ansteuerungen der absperrbaren Ventile etwa über die hier nur schematisch dargestellte Steuereinheit 160 (etwa dem Bordcomputer des Fahrzeugs) ein unabhängiges Beaufschlagen der einzelnen Luftkissen 152 mit Luft. Damit kann etwa realisiert werden, dass ein Teil der vorgesehenen Luftkissen (sofern mehr als eines vorgesehen ist) mit Luft beaufschlagt wird, indem die absperrbaren Ventile geöffnet werden und durch die Druckversorgung 111 Luft in diese Ventile eingebracht wird, wohingegen die übrigen absperrbaren Ventile geschlossen bleiben und keine Luft in die diesen absperrbaren Ventilen zugeordneten Luftkissen eingebracht wird.

Dadurch können gezielt verschiedenste Funktionen realisiert werden. Beispielsweise kann so die oben angesprochene Massagefunktion realisiert werden, indem die einzelnen Luftkissen etwa auch mit unterschiedlicher Frequenz oder gegenläufig oder abwechselnd mit Luft beaufschlagt werden. Auch bestimmte Entertainmentfunktionen, wie etwa eine Unterstützung von akustischen Effekten, wie Musik oder Filmen, durch gezieltes Beaufschlagen einzelner oder mehrerer Luftkissen mit Luft kann so erfolgen. Alternativ oder zusätzlich kann auch vorgesehen sein, dass durch das Beaufschlagen der Luftkissen mit Luft oder das Ablassen der Luft Assistenzsysteme eines Fahrzeuges realisiert werden. So kann etwa eine Line-Assist-Funktion und/oder eine Fahrspurwechselwarnfunktion mit der Luftkissenanordnung realisiert werden. Beispielsweise kann bei einem Spurwechsel von der rechten auf die linke Spur eine Reihe von in Fahrzeugrichtung links am Sitz montierten Luftkissen mit Luft beaufschlagt werden, um den Fahrer zu warnen, dass ein Fahrspurwechsel bevorsteht. Die rechts in Fahrtrichtung montierten Luftkissen können dann leer bleiben, also nicht mit Luft beaufschlagt werden.

Ganz grundsätzlich könnten etwa seitlich im Sitz angeordneten Luftkissen (etwa seitlich im Be reich der Lehne und/oder der Sitzfläche und/oder in den Wangen der Sitzfläche und/oder den Wangen der Lehne) mit einem entsprechenden Pulsationsmodul ausgestattet sein. In den Wan gen angeordnete Luftkissen können auch genutzt werden, um die Kontur des Sitzes an die Körperform des Insassen anzupassen, indem die entsprechend in den Wangen angeordneten Luftkissen je nach Körperform des Insassen mehr oder weniger mit Luft beaufschlagt werden, um dem Insassen unabhängig von seiner Statur einen Seitenhalt zu geben. Die Luftkissen dieser Wangen können dann nicht nur eine Anpassung an die Körperform ermöglichen, sondern zusätzlich die weiteren Funktionen wie Massage, Spurwechselwarnfunktion und Entertainment-Funktionen inklusive der Pulsation realisieren.

Auch andere Funktionen, die eine Unterstützung durch eine solche Druckwirkung auf den Körper ausnutzen können, um dem Bediener bestimmte Informationen zukommen zu lassen, können mit der Luftkissenanordnung realisiert werden. Die Erfindung ist also diesbezüglich nicht beschränkt, obschon der Einsatz in Fahrzeugen als Teil eines Fahrzeugsitzes und insbesondere der Einsatz als Teil einer Massagevorrichtung im Fahrzeugsitz bevorzugt ist.

Obige zusätzliche Funktionen können nicht nur durch das Beaufschlagen und Ablassen der Luft aus den Luftkissen bewirkt werden. Alternativ oder zusätzlich kann auch die erfindungsgemäß vorgesehen Pulsation dazu genutzt werden.

Erfindungsgemäß umfasst die Luftkissenanordnung weiterhin ein Pulsationsmodul 102. Dieses Pulsationsmodul ist strukturell unabhängig und gegebenenfalls auch separat von dem Luftversorgungssystem und hier insbesondere von den absperrbaren Ventilen 112 vorgesehen. Dies bedeutet insbesondere, dass das Pulsationsmodul nicht in die absperrbaren Ventile oder die Druckversorgung 111 integriert ist.

Insbesondere ist vorgesehen, dass das absperrbare Ventil über die Versorgungsleitung 151 mit dem jeweiligen Luftkissen 152 verbunden ist. Das Pulsationsmodul 102 ist also derart mit den Luftkissen 152 verbunden, dass es in Strömungsrichtung der Luft von Druckversorgung 1 11 zu den Luftkissen 152 zumindest nach den absperrbaren Ventilen 112 angeordnet ist.

Erfindungsgemäß umfasst das Pulsationsmodul 102 wenigstens ein Pneumatik-Element 121. Dieses Pneumatik-Element 121 ist als ein Element zu verstehen, das ein veränderbares Luftvolumen enthalten kann. Dabei kann es sich beispielsweise um ein Luftkissen handeln, das komprimierbar ist.

Das Pneumatik-Element 121 ist erfindungsgemäß druckausgeglichen mit der Versorgungsleitung 151 und damit auch druckausgeglichen mit dem Luftkissen 152 verbunden. Dies bedeutet, dass sich in dem Pneumatik-Element, der Versorgungsleitung 151 und dem Luftkissen 152 stets dieselben Druckverhältnisse einstellen, wobei eine räumliche Varianz der Druckverhältnisse aufgrund einer Informationsübertragung, etwa in Form einer Dichtewelle, dem nicht entgegenstehen soll. Die druckausgeglichene Verbindung des Pneumatik-Elements 121 mit der Versorgungsleitung 151 und dem Luftkissen 152 ist grundsätzlich so zu verstehen, dass bei abgesperrtem Ventil 112 die Gesamtmenge an Luft, die in dem Pneumatik-Element, der Versorgungsleitung 151 und dem Luftkissen 152 vorhanden ist, konstant bleibt.

Weiterhin umfasst das Pulsationsmodul 102 ein Betätigungselement 122. Dieses Betätigungselement ist derart ausgebildet, dass es durch eine mechanische Bewegung auf das Pneumatik-Element 121 einwirken kann, um eine Veränderung des Volumens des Pneumatik-Elements zu bewirken. Wie oben geschildert, besteht eine druckausgeglichene Verbindung zwischen dem Pneumatik-Element 121, der Versorgungsleitung 151 und dem Luftkissen 152. Wird nun das Volumen des Pneumatik-Element 121 verändert, so führt dies bei konstanter Luftmenge in dem System (bei abgesperrtem Ventil 112) dazu, dass sich der Druck innerhalb des Systems verändert. Dies kann etwa zu einer weiteren Ausdehnung des Luftkissens 152 führen (Druckerhöhung) oder auch zu einer Reduzierung des Volumens des Luftkissens 152 bzw. des darin wirkenden Druckes.

Durch eine periodische Betätigung des Betätigungselements führt dies zu einer periodischen Pulsation des Luftkissens 152. Die Druckinformation, die die Veränderung des Volumens des Pneumatik-Elements 121 durch die Betätigung des Betätigungselements 122 in dem System aus Pneumatik-Element, Versorgungsleitung 151 und Luftkissen 152 überträgt, bewegt sich mit einer Geschwindigkeit, die kleiner oder höchstens gleich Schallgeschwindigkeit, was bei den Dimensionen eines Sitzes einer im Wesentlichen instantanen Übertragung dieser Druckinformation und damit auch eine entsprechende Veränderung der Druckverhältnisse im Luftkissen 152 bewirkt, sodass diese Pulsation sehr schnell erfolgen kann und das System insgesamt weniger träge ist.

In der in Fig. 1 a dargestellten Ausführungsform ist jeweils ein Pneumatik-Element 121 mit jeweils genau einer Versorgungsleitung 151 und darüber mit genau einem Luftkissen 152 verbunden. Dies ist eine besonders bevorzugte Ausführungsform, ist so jedoch nicht zwingend. Beispiels weise kann auch vorgesehen sein, dass ein einzelnes Pneumatik-Element 121 für eine Mehrzahl von Luftkissen 152 bereitgestellt wird. Dies kann insbesondere dann von Vorteil sein, wenn diese Mehrzahl von Luftkissen stets als Gruppen von Luftkissen mit Luft beaufschlagt wird oder nicht mit Luft beaufschlagt wird, da dann für sämtliche Luftkissen stets dieselben Druckverhältnisse herrschen und das Beaufschlagen dieser Luftkissen mit einer Pulsation erfolgen kann.

Zusätzlich ist in der Fig. 1 schematisch dargestellt, dass jeweils ein Betätigungselement 122 genau einem Pneumatik-Element 121 zugeordnet ist. Dies stellt zum einen schon zwei separate Ausführungsformen dar. So kann einerseits vorgesehen sein, dass jedes dieser separaten Betätigungselemente 122 etwa mit Hilfe der Steuereinheit 160 völlig unabhängig von den übrigen Betätigungselementen angesteuert werden kann, um gegebenenfalls eine Pulsation in dem dazugehörigen Luftkissen zu bewirken. In diesem Fall ist es möglich, die unterschiedlichen Phasen der Schwingungen bzw. Pulsationen so aufeinander abzustimmen (indem unterschiedliche Luftkissen mit einer Pulsation verschiedener Phase beaufschlagt werden), dass unerwünschte Schwingungen im Fahrzeugsitz unterbunden werden, die sich etwa durch Erreichen einer Resonanzfrequenz ergeben könnten. Alternativ kann auch vorgesehen sein, dass, obwohl separate Betätigungselemente 122 für die einzelnen Pneumatik-Elemente 121 vorgesehen sind, die Betätigungselemente 122 alle mit derselben Phase in Bewegung versetzt werden, um die Pulsation zu bewirken. Dies kann vorteilhaft genutzt werden, wenn die Luftkissen und insbesondere die Pneumatik-Elemente und die Betätigungselemente an unterschiedlichen Stellen des Sitzes verteilt sind, sodass ein dezentrales System realisiert werden kann, in dem die Leitungswege über die Versorgungsleitun gen 151 zumindest zwischen dem jeweiligen Pneumatik-Element 121 und dem dazugehörigen Luftkissen 152 möglichst kurz sind, die Pulsation jedoch in allen Luftkissen gleichzeitig erfolgt. Wenn auch, wie oben beschrieben, die Druckinformation sich in dem System mit Schallgeschwindigkeit ausbreitet, so können unterschiedlich lange Leitungen doch zu einer geringfügigen, für den Bediener eventuell als unangenehm empfundenen Verzögerung führen, die mit dieser Ausführungsform verhindert werden kann.

Alternativ zu den eben beschriebenen Ausführungsformen kann jedoch auch vorgesehen sein, dass eine Reihe von Pneumatik-Elementen 121 durch ein einzelnes Betätigungselement 122 betätigt wird. Dies erfordert nicht, wie später noch beschrieben wird, dass sämtliche Pneumatik- Elemente der Reihe von Pneumatik-Elementen gleichzeitig und mit gleicher Phase betätigt werden. Auch eine abwechselnde Betätigung der Pneumatik-Elemente durch das eine Betätigungselement ist hier denkbar.

In einer Ausführungsform kann auch vorgesehen sein, dass ein einzelnes Betätigungselement für sämtliche Pneumatik-Elemente der Luftkissenanordnung vorgesehen ist.

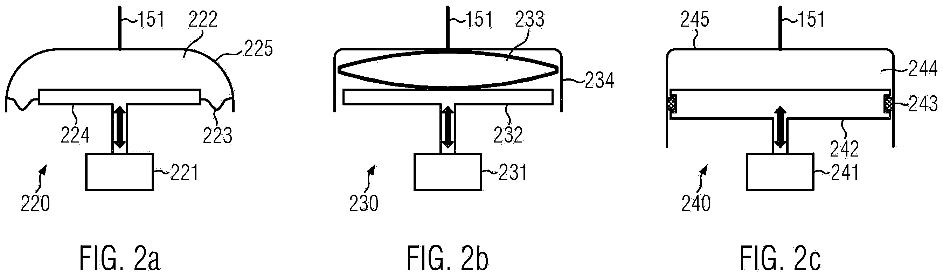

Fig. 2 zeigt eine detailliertere Ansicht eines Pulsationsmoduls, wie es bereits in Fig. 1 beschrieben wurde. In der hier dargestellten Ausführungsform umfasst das Pulsationsmodul lediglich ein Pneumatik-Element und ein Betätigungselement, obwohl die Erfindung, wie bereits mit Bezug zu Fig. 1 beschrieben wurde, diesbezüglich nicht beschränkt ist. Insbesondere ist es nicht notwendig, dass eine 1:1-Zuordnung eines Pneumatik-Elements und eines Betätigungselements vorliegt, sondern ein Betätigungselement kann auch mehrere Pneumatik-Elemente betätigen.

In der in Fig. 2a dargestellten Ausführungsform des Pulsationsmoduls 220 ist vorgesehen, dass das Pneumatik-Element teilweise durch das Betätigungselement 224 gebildet wird. Das Betätigungselement ist hier etwa als Stempel ausgebildet, der durch den Antrieb 221 (etwa ein Elektromotor, insbesondere ein Servomotor) in der dargestellten Pfeilrichtung beweglich ist. Die Bewegung des Betätigungselements 224 erfolgt innerhalb eines durch eine Begrenzungsfläche (auch Arbeitsraum genannt) 225 des Pneumatik-Elements teilweise begrenzten Volumens 222. Weiter hin ist das Innenraumvolumen 222 des so gebildeten Pneumatik-Elements durch eine (bevorzugt) flexible Membran 223 begrenzt. So entsteht ein nach außen hin abgeschlossenes Innenraumvolumen 222, das mit der Versorgungsleitung 151 im Sinne der Fig. 1 druckausgeglichen verbunden ist.

Wird nun das Betätigungselement 224 durch den Antrieb 221 bewegt, ändert sich (beispielsweise periodisch) das Innenraumvolumen 222. Die so entstehende Veränderung des Drucks der Luft innerhalb des Innenraumvolumens 222 wird dann über die Versorgungsleitung 151 an das in Fig. 2a nicht dargestellte Luftkissen 152 übertragen, womit eine Pulsation im Luftkissen 152 bewirkt werden kann. Gemäß dieser Ausführungsform, aber auch gemäß allen weiteren beschriebenen Ausführungsformen, können hier insbesondere Frequenzen zwischen 1 Hz und 1.000Hz bevorzugt sein. Für eine Massagefunktion oder ähnliche Funktionen eines Fahrzeugsitzes haben sich Schwingungen zwischen 3Hz und 100Hz, insbesondere zwischen 60Hz und 80Hz und besonders bevorzugt bei etwa 70Hz oder zwischen 5 und 20Hz, insbesondere zwischen 5 und 15Hz, besonders bevorzugt zwischen 7 und 12Hz, als für einen Menschen besonders angenehm herausgestellt, sodass auch eine Langzeitnutzung einer entsprechenden Funktion für den Menschen nicht unangenehm wirkt.

In der Fig. 2b ist eine weitere Ausführungsform eines Pulsationsmoduls 230 gezeigt, die sich von der Fig. 2a im Wesentlichen dadurch unterscheidet, dass das Pneumatik-Element 233 vollständig durch ein Luftkissen (auch als Pneumatik-Kissen bezeichnet) gebildet wird, das ein Innenraumvolumen besitzt und eine flexible äußere Form aufweist, die durch das Betätigungselement 232 verändert werden kann, etwa durch Quetschen bzw. Zusammendrücken des als Luftkissen aus gebildeten Pneumatik-Elements 233.

Um ein Ausweichen des Luftkissen gegen die mechanische Bewegungen des Betätigungselements 232 zu vermeiden, kann vorgesehen sein, dass das Luftkissen 233 in einem Rahmen 234 bzw. in einer Halterung angeordnet ist und mit dieser gegebenenfalls auch mechanisch verbunden ist (etwa durch Kleben), sodass bevorzugt eine geführte Bewegung des Betätigungselements 232 und des Luftkissens 233 bewirkt werden kann, die nur innerhalb des Rahmens 234 stattfindet, sodass sich die durch das Betätigungselement 232 bewirkte Veränderungen des Volumens des Luftkissens 233 vollständig in eine durch die Versorgungsleitung 151 übertragbare Druckinformation bzw. Pulsation umsetzen lässt. Diese Ausführungsform bietet den Vorteil, dass lediglich das Luftkissen als Pneumatik-Element wirkt und das Betätigungselement davon vollständig unabhängig ist, insbesondere nicht als einen Teil des Innenraumvolumens bildend vorgesehen ist.

Während die flexible Membran 223 in der Fig. 2a somit für ein zuverlässiges Abdichten des Innenraumvolumens 222 auch bei Bewegung des Betätigungselements sorgte, muss die Bewegung des Betätigungselements nun nicht mehr zusätzlich gegen die Umgebung abgedichtet werden.

Fig. 2c zeigt eine weitere Ausführungsform eines Pulsationsmoduls 240. In der hier dargestellten Ausführungsform ist, verglichen mit der Fig. 2a, anstelle der flexiblen Membran 223 eine Dichtungsanordnung 243 vorgesehen, die zusammen mit dem Betätigungselement 242 und dem Gehäuse 245 ein Innenraumvolumen 244 einschließt. Auch hier kann das Innenraumvolumen 244 dann durch die Bewegung des Betätigungselements 242 mittels des Antriebs 241 verändert werden, um die entsprechende Pulsation über die Versorgungsleitung 151 einem nachgeordneten Luftkissen zuzuführen.

Diese Ausführungsform bietet den Vorteil, dass das Innenraumvolumen 244 des Pneumatik-Elements praktisch vollständig durch mechanisch nicht kompressible Element (das Betätigungselement 242 und das Gehäuse 245) begrenzt ist. Das Dichtelement bzw. die Dichtungsanordnung 243 kann etwa aus einem vergleichsweise harten Gummi bestehen. Hierdurch ist das zur Verfügung stehende Volumen auch über lange Betriebszeiträume nicht dem "Verschleiß" ausgesetzt, wie dies für das Luftkissen und die flexible Membran 223 der Fall wäre. Diese können einer Materialermüdung unterliegen, die ihre Verwendung für das Bewirken der Pulsation über lange Betriebszeiträume bzw. Lebensdauern schwieriger oder störanfälliger machen kann.

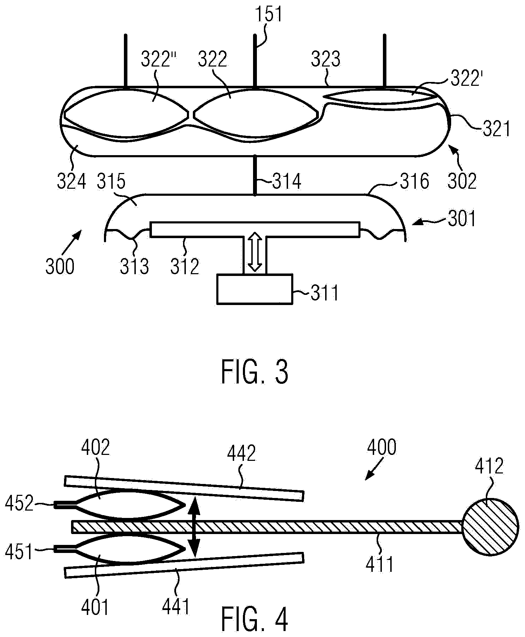

Fig. 3 zeigt eine weitere Ausführungsform, bei der eine Entkopplung der Bewegung des Betätigungselements (also der mechanischen Betätigung) von den Pneumatik-Elementen erfolgt.

Dazu ist vorgesehen, dass ein oder mehrere Pneumatik-Elemente 322 (etwa in Form von Luftkissen) in einem Raumbereich angeordnet sind, der zum einen durch ein Gehäuse oder andere ge eignete Begrenzung 323 und zum anderen durch eine flexible Membran 321 begrenzt wird. Die Luftkissen ihrerseits sind, wie in den vorangegangenen Ausführungsformen, durch die Versorgungsleitungen 151 jeweils bevorzugt mit genau einem Luftkissen der Luftkissenanordnung verbunden.

Der auf der gegenüberliegenden Seite der flexiblen Membran 321 gebildete Bereich ist über eine Leitung 314 mit einem weiteren Luftvolumen 301 verbunden. Dieses Luftvolumen, das sich in dem Bereich zwischen der flexiblen Membran 321, der Leitung 314 und dem Bereich 315 bildet, ist bevorzugt konstant und vor allem nicht mit dem Luftversorgungssystem der Luftkissenanordnung verbunden. Der Bereich 315 ist analog zur Fig. 2a abgegrenzt zum einen durch das Betätigungselement 312 und dem ihm zugeordneten Antrieb 311 , sowie durch eine flexible Membran 313 und ein Gehäuse 316.

Wird das Betätigungselement 312 nun betätigt, so führt dies dazu, dass sich der Druck innerhalb der Bereiche 315 und 324 sowie der Leitung 314 verändert, da sich das zur Verfügung stehende Volumen verändert. Dies wirkt über die flexible Membran auf die Luftkissen 322, die sich entsprechend deformieren und eine Pulsation (bei gepulster Bewegung des Betätigungselements) auf die mit ihnen über die Versorgungsleitung 151 verbundenen Luftkissen übertragen. Diese Ausführungsform kann besonders vorteilhaft genutzt werden, um ein einziges Betätigungselement für die Betätigung mehrerer Pneumatik-Elemente zu nutzen. Wie hier dargestellt, sind die Pneumatik- Elemente 322 und 322" mit Luft gefüllt, also auch die entsprechenden Versorgungsleitungen 151 mit Druck beaufschlagt worden. Das Luftkissen 322' ist abgeflacht, insbesondere luftleer dargestellt, da in der dazugehörigen Versorgungsleitung keine Druckluft eingebracht wurde. Damit kann selbst bei Betätigung des Betätigungselements sichergestellt werden, dass keine unerwünschte Pulsation in dem dem Luftkissen 322' zugeordneten Luftkissen am anderen Ende der zugehörigen Versorgungsleitung bewirkt wird. Damit kann trotz eines einzelnen Betätigungselements für eine Gruppe von Pneumatik-Elementen sichergestellt werden, dass dennoch nur die mit Luft beaufschlagten Luftkissen oder Luftkissenanordnung mit einer Pulsation beaufschlagt werden.

In einer alternativen Ausführungsform kann entsprechend der Fig. 2b auch vorgesehen sein, dass in dem Gehäuse 234 mehrere Luftkissen angeordnet sind. Ein "druckloses" Luftkissen, wie das Luftkissen 322', wird dann auch durch mechanischen Hub des Betätigungselementes keine Druckinformation an das zugehörige Luftkissen der Luftkissenanordnung übertragen. Um dies weiter sicherzustellen, kann vorgesehen sein, dass in einem solchen Fall die Bewegung des Betätigungselements hinsichtlich seiner Amplitude so eingestellt wird, dass das Betätigungselement ein druckloses Luftkissen nicht berührt, sodass selbst ein in dem Pneumatik-Element verbleibender Anteil von "Restluft" keine unerwünschte Pulsation in dem zugehörigen Luftkissen bewirkt.

Fig. 4 zeigt eine weitere Ausführungsform eines Betätigungselements 400, wobei das Betätigungselement in dieser Ausführungsform als um eine Achse 412 schwenkbar Schwenkarm 411 ausgebildet ist.

In der hier dargestellten Ausführungsform sind zwei Luftkissen 401 und 402 vorgesehen, wobei das erste Luftkissen 401 auf einer Seite des Schwenkarms und das zweite Luftkissen 402 auf der gegenüberliegenden Seite des Schwenkarms angeordnet ist. Weiterhin sind Gegendruckelemente 441 und 442 dergestalt vorgesehen, dass die Luftkissen jeweils zwischen dem Schwenk arm 41 1 und dem ihm zugeordneten Gegendruckelement angeordnet sind, was eine Stabilisierung der Position der Luftkissen bewirkt. Damit wird sichergestellt, dass die auf das Luftkissen übertragene mechanische Information möglichst vollständig in Druckinformationen umgesetzt wird, die als Pulsation durch die jeweiligen Versorgungsleitungen 451 und 452 transportiert werden kann.

In der hier dargestellten Ausführungsform ist nun vorgesehen, dass das Betätigungselement in Form des Schwenkarms 411 um die Achse 412 in der dargestellten Doppelpfeilrichtung geschwenkt wird. Dadurch wird abwechselnd das eine Luftkissen 401 entlastet und das andere Luftkissen 402 belastet bzw. umgekehrt, was eine gegenphasige Belastung der Luftkissen 401 und 402 bewirkt, womit auch die Pulsation exakt gegenphasig durch die Versorgungsleitungen 451 und 452 läuft. Dies ist besonders vorteilhaft, um Resonanzen in der Luftkissenanordnung zu vermeiden, die sich gegebenenfalls unangenehm auf den Menschen auswirken können.

Während in der hier dargestellten Ausführungsform lediglich ein Luftkissen auf jeder Seite des Schwenkarms 411 angeordnet ist, können auch (in einer Richtung senkrecht zur Bildebene der Fig. 4) mehrere Luftkissen angeordnet sein, sodass so beispielsweise unterschiedliche Gruppen von Luftkissen gegenphasig betrieben werden können. Auch hier kann vorgesehen sein, dass drucklose Luftkissen von dem Schwenkarm 41 1 entweder nicht berührt werden oder zumindest keine Druckinformation in die ihnen zugehörigen Luftkissen der Luftkissenanordnung übertragen, sodass auch das Abschalten (Ablassen der Luft) separater Luftkissen möglich ist, ohne dass in diesen eine Pulsation bewirkt wird.

Überdies muss kein Verschwenken erfolgen. In einigen Ausführungsformen kann anstelle des Schwenkarms auch vorgesehen sein, dass das Betätigungselement linear bewegbar ist, wobei dann auf gegenüberliegenden Seiten des Betätigungselements Pneumatik-Elemente derart an geordnet sein können (etwa auch unter Verwendung entsprechender Gegendruckelemente 441 und 442), dass die Bewegung des Betätigungselements analog zur obigen Ausführungsform zur Fig. 4 abwechselnd eine Belastung des einen und eine Entlastung des anderen Pneumatik-Elements bewirkt, um so bei (periodischer oder wiederholter) Bewegung des Betätigungselements eine Pulsation im Luftkissen bzw. in den den Pneumatik-Elementen zugeordneten Luftkissen zu bewirken.

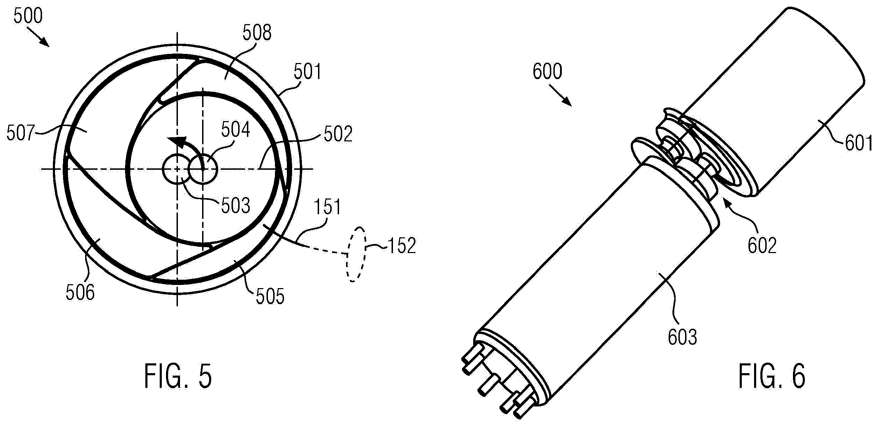

Fig. 5 zeigt eine weitere Ausführungsform der Erfindung, wobei in dieser Ausführungsform das Pulsationsmodul 500 als Zylinder ausgestaltet ist, der hier nur in einer Querschnittsansicht dargestellt ist, wobei die Bildebene der Fig. 5 senkrecht zur Längsachse des Zylinders verläuft.

In der hier dargestellten Ausführungsform ist eine Reihe von Luftkissen 505 bis 508 an der Innenwand eines äußeren Begrenzungszylinders 501 angeordnet. Dies kann beispielsweise durch Verkleben der Luftkissen oder andere mechanische Befestigung, wie Verschrauben oder Einklemmen, realisiert werden, solange sichergestellt ist, dass die Luftkissen luftdicht abgeschlossen sind. Jedes der Luftkissen (am Beispiel des Luftkissens 505 gezeigt) ist über eine entsprechende, aus dem äußeren Begrenzungszylinder 501 hinausführende Versorgungsleitung 151 mit einem Luftkissen 152 der Luftkissenanordnung verbunden.

Bevorzugt weisen die Luftkissen 505 bis 508 dieselbe Form und/oder dasselbe Volumen auf.

Weiterhin ist in dem äußeren Begrenzungszylinder 501 ein Betätigungselement 502 angeordnet, das in dieser Ausführungsform als exzentrisch zur Längsachse des äußeren Begrenzungszylinders 501 angeordnete Walze realisiert ist, die sich zumindest entlang eines Teils der Gesamtlänge (senkrecht zur Bildebene) des äußeren Begrenzungszylinders 501 erstreckt.

Dabei kann vorgesehen sein, dass die Walze entweder eine zylindrische Form aufweist oder (geringfügige) Abweichungen von der zylindrischen Form besitzt. Insbesondere können Abweichungen an der Grundfläche und der Deckfläche der Walze (entsprechend den Grundflächen und Deckflächen des äußeren Begrenzungszylinders 501 vorgesehen sein, die etwa eine Abschrägung der Walze zu der Grund- bzw. der Deckfläche hin bewirken. Beispielsweise kann vorgesehen sein, dass sich ausgehend von dem Mittelpunkt der Walze der Radius der Walze in Richtung der Grundfläche bzw. Deckfläche verringert. Dies kann bevorzugt in Form einer Kurve (etwa eines Parabelausschnitts) erfolgen, um Kanten und damit unerwünschte Belastungen der Luftkissen zu vermeiden.

In der hier dargestellten Ausführungsform dreht sich die Walze im Betrieb des Betätigungselements mit ihrer Mittelachse 504 um die Mittelachse 503 des äußeren Begrenzungszylinders. Aufgrund der exzentrischen Anordnung der Walze 504 führt das dazu, dass bei Drehung der Walze 502 um die Achse 503 die Luftkissen 505 bis 508 unterschiedlich stark deformiert werden, wie dies in der Fig. 5 bereits zu erkennen ist. Das Luftkissen 505 ist hier stark deformiert, dessen Volumen also deutlich kleiner als das des Luftkissens 507. Dadurch wird erneut eine Druckinformation in den Luftkissen erzeugt, die als Pulsation (bei wiederholter und/oder periodischer Drehung der Walze) über die Versorgungsleitung 151 den Luftkissen 152 der Luftkissenanordnung übertragen werden kann.

Während in der hier dargestellten Ausführungsform die Walze innerhalb des Bereichs angeordnet ist, in dem die Luftkissen angeordnet sind, kann auch vorgesehen sein, dass die Luftkissen von einem als Hohlwalze ausgestalteten Betätigungselement im Zylinder 501 umgeben sind, wobei dann die Luftkissen beispielsweise mit einer physisch ausgebildeten Achse 503 des Begrenzungszylinders 501 fest verbunden sind, um ihre Position zu fixieren. Die Walze läuft dann exzentrisch außen um die Luftkissen um und bewirkt so die gewünschte Deformation zum Erzeugen der Pulsation.

Während in der in Fig. 5 dargestellten Ausführungsform die Walze direkt mit den Luftkissen in Kontakt tritt, kann auch vorgesehen sein, dass an der der Walze 502 zugewandten Oberfläche der Luftkissen Abstandshalter, etwa in Form von Gummielementen oder allgemein elastischen Elementen, angeordnet sind, mit denen die Walze 502 bei ihrer Drehung wechselwirkt, um eine mechanische Bewegung der Walze in eine Deformation der Luftkissen zu übertragen. Dies vermindert den Verschleiß an der Oberfläche der Luftkissen.

Zusätzlich oder alternativ kann vorgesehen sein, dass die Kontaktfläche der Luftkissen mit der Walze mit einem Schmiermittel, etwa einem Schmierfett, beaufschlagt ist und/oder dass die Pneumatik-Elemente (insbesondere Luftkissen) an ihrer Kontaktfläche mit einer TPU-Folie ausgestattet sind, sodass die Reibung mit dem Zylinder reduziert wird. Beide Ausführungsformen erlauben eine Reduktion der physischen Belastung der Pneumatik-Elemente, sodass ihre Langlebigkeit vorteilhaft gesteigert werden kann.

Weiterhin kann vorgesehen sein, dass eine Naht der Luftkissen so angeordnet wird, dass die auf die Naht einwirkende physische Belastung möglichst gering ist. Eine solche Naht ist vorgesehen, um das Luftkissen zu schließen. Die Naht kann dabei etwa verklebt sein, indem das Material, aus dem das Luftkissen besteht, erhitzt wird und teilweise aufschmilzt. Würde die Naht senkrecht zur dargestellten Bildebene in Fig. 5 verlaufen, also parallel zur Achse 503 des Begrenzungszylinders 501, würde dies bedeuten, dass das Luftkissen über seine gesamte Länge entlang der Naht gleichzeitig durch die Entlangbewegung der Walze belastet wird. Um dies zu vermeiden, kann vorgesehen sein, dass die Naht ausgehend vom oberen Ende bzw. der oberen Eckfläche des äußeren Begrenzungszylinders 501 in Richtung der unteren Begrenzungsfläche des äußeren Begrenzungszylinders sich zumindest teilweise auch in Umfangsrichtung erstreckt, sodass sie einen Winkel mit der Achse des äußeren Begrenzungszylinders 501 einschließt. Dadurch wird gewährleistet, dass bei Drehung der Walze 502 nicht gleichzeitig die gesamte Naht des Luftkissens belastet wird, sondern unterschiedliche Bereiche der Naht bei unterschiedlichen Drehstellungen der Walze belastet werden, was eine Verteilung der auf das Luftkissen einwirkenden Kräfte bewirkt und damit eine Verbesserung der erwartbaren Lebenszeit des Luftkissens erzielt.

Um einen Einbau dieser Ausführungsform möglichst platzsparend etwa in einer Rückenlehne eines Fahrzeugsitzes zu ermöglichen, kann vorgesehen sein, dass die Ausdehnung der Luftkissen, der Walze und des äußeren Begrenzungszylinders in einer Richtung senkrecht zur Bildebene möglichst gering ist, bevorzugt nicht größer als 2cm oder nicht größer als 3cm ist. Um dennoch ein ausreichendes Volumen für das Bewirken einer Pulsation zu gewährleisten, kann vorgesehen sein, dass der Innendurchmesser des äußeren Begrenzungszylinders wenigstens 5cm, bevorzugt wenigsten 7cm, bevorzugt aber nicht mehr als 10cm beträgt. Die Walze und die Luftkissen können dann entsprechend den Anforderungen dimensioniert sein, wobei das Volumen der Luftkissen oder allgemeiner Pneumatik-Elemente auch von der Anzahl der vorgesehenen Pneumatik-Elemente abhängt.

Als Antrieb der Betätigungselemente kann ganz grundsätzlich (nicht nur in Fig. 5 oder Fig. 2) ein Elektromotor, insbesondere ein Servomotor, vorgesehen sein. Da jedoch die Frequenz, mit der die Pulsation in den Luftkissen der Luftkissenanordnung erzeugt werden soll, teilweise von den für Servomotoren üblichen Drehfrequenzen abweichen kann, kann vorgesehen sein, dass eine Verbindung des Antriebs und des Betätigungselements über ein Getriebe vermittelt wird, das ein bestimmtes Übersetzungsverhältnis realisiert.

Eine solche Anordnung ist schematisch in der Fig. 6 gezeigt. Der Antriebsmotor ist hier als Antriebsmotor 601 dargestellt und kann beispielsweise als Elektromotor oder Servomotor ausgebildet sein. Zwischen diesem Antriebsmotor 601 und dem Pulsationselement, insbesondere dem Betätigungselement 603 (etwa der Walze aus Fig. 5 oder den Betätigungselementen der Fig. 2 bis 4) kann ein Getriebe 602 angeordnet sein, das ein bestimmtes Übersetzungsverhältnis der Drehzahl des Antriebsmotors und der Frequenz des Betätigungselements bewirkt. Dieses Übersetzungsverhältnis kann je nach Anwendung eingestellt werden. Prinzipiell denkbar ist auch, dass unterschiedliche Übersetzungsverhältnis mit ein und demselben Getriebe realisiert werden können, wie dies aus Getrieben in der Antriebstechnik hinlänglich bekannt ist. So kann die Frequenz der Pulsation eingestellt werden, was insbesondere mit Hinblick auf verschiedene Anwendungsbereiche dieser Pulsationswirkung (Massagefunktion einerseits, Unterstützung eines Entertainmentsystems andererseits beispielsweise) besonders vorteilhaft sein kann. So kann vorgesehen sein, dass die Steuereinheit mit dem Getriebe verbunden ist und eine Steuerung des Übersetzungsverhältnisses bewirken kann, etwa abhängig von einer gewünschten oder geforderten Pulsationsfrequenz für bestimmte Anwendungen.

Während die Luftkissenanordnung gemäß der Erfindung hier nur allgemein beschrieben wurde, kann insbesondere vorgesehen sein, dass diese Luftkissenanordnung im Bereich einer Rückenlehne eines Fahrzeugsitzes und/oder im Bereich einer Sitzfläche eines Fahrzeugsitzes angeordnet wird. Insbesondere kann eine Kombination dieser Luftkissenanordnung mit einem Lordosestützsystem, wie es in der Automobilindustrie mittlerweile häufig eingesetzt wird, in einem Sitz realisiert werden. Die Anzahl der Luftkissen des Luftversorgungssystems, die eine Druckwirkung auf den Körper des sitzenden Menschen bewirken, ist dabei prinzipiell beliebig, kann etwa 10 oder 20 Luftkissen umfassen. Sämtliche Anzahlen von Luftkissen sind hier denkbar.

Insbesondere ist vorgesehen, dass das Pulsationsmodul und die Luftkissen der Luftkissenanordnung in dem Sitz verbaut sind. Das Luftversorgungssystem hingegen muss nicht notwendigerweise auch im Sitz angeordnet sein und kann beispielsweise auch in einem Fahrzeugboden angeordnet sein. Alternativ kann beispielsweise die Luftkissenanordnung in der Lehne des Sitzes angeordnet sein, wohingegen das Luftversorgungssystem in der Sitzfläche angeordnet ist.

Ein ersten Aspekt betrifft eine Luftkissenanordnung 100 für einen Sitz 130, wie etwa einen Fahrzeugsitz, umfassend wenigstens ein Luftkissen 152 und ein Luftversorgungssystem 101 zum variablen Beaufschlagen der Luftkissen der Luftkissenanordnung mit Luft, wobei jeweils eine ein ab- sperrbares Ventil 112 umfassende Versorgungsleitung 151 von dem Luftversorgungssystem 101 zu jedem Luftkissen 152 führt, wobei ein Pulsationsmodul 102 vorgesehen ist, das ausgebildet ist, jedes Luftkissen mit einer Pulsation zu beaufschlagen, wobei das Pulsationsmodul 102 ein mit wenigstens einer Versorgungsleitung 151 druckausgeglichen verbundenes Pneumatik-Element 121 und ein Betätigungselement 122 zum Übertragen einer mechanischen Bewegung auf das Pneumatik-Element zum Verändern des Volumens des Pneumatik-Elements zur Erzeugung einer Pulsation umfasst.

Ein zweiter Aspekt betrifft die Luftkissenanordnung 100 nach Aspekt 1, wobei jedes Pneumatik-Element 121 mit genau einer Versorgungsleitung 151 verbunden ist.

Ein dritter Aspekt betrifft die Luftkissenanordnung 100 nach Aspekt 1 oder 2, wobei das Betätigungselement 122 die Pneumatik-Elemente 121 unabhängig voneinander betätigen kann.

Ein vierter Aspekt betrifft die Luftkissenanordnung 100 nach einem der Aspekte 1 bis 3, wobei das Pneumatik-Element 121 ein Luftkissen 233 umfasst.

Ein fünfter Aspekt betrifft die Luftkissenanordnung 100 nach einem der Aspekte 1 bis 4, wobei jedem Pneumatik- Element 121 ein unabhängiges Betätigungselement 122 zugeordnet ist.

Ein sechster Aspekt betrifft die Luftkissenanordnung 100 nach Aspekt 5, wobei das Pneumatik-Element 121 ein Luftkissen 233 mit einem Innenraumvolumen, das mit der Versorgungsleitung 151 druckausgeglichen verbunden ist, umfasst und das Betätigungselement 121 ausgebildet ist, das Innenraumvolumen des Luftkissens durch mechanische Einwirkung zum Beaufschlagen des Luftkissens mit einer Pulsation zu verändern; oder wobei das Pneumatik-Element 121 aus einer flexiblen Membran 223 und dem Betätigungselement 224 sowie einem Arbeitsraum 225 gebildet wird, wobei die flexible Membran, das Betätigungselement und der Arbeitsraum gemeinsam ein Innenraumvolumen des Pneumatik-Elements, das mit der Versorgungsleitung druckausgeglichen verbunden ist, begrenzen und wobei das Betätigungselement 224 ausgebildet ist, durch mechanische Bewegung das Innenraumvolumen zum Beaufschlagen des Luftkissens mit einer Pulsation zu verändern.

Ein siebter Aspekt betrifft die Luftkissenanordnung 100 nach einem der Aspekte 1 bis 4, wobei das Betätigungselement 122 zum gegenphasigen Betätigen mehrerer Pneumatik-Elemente 121 ausgebildet ist.

Ein achter Aspekt betrifft die Luftkissenanordnung 100 nach Aspekt 7, wobei das Betätigungselement 122 einen Schwenkarm 411 umfasst, der um einen Winkel um eine Achse verschwenkbar ist, wobei auf gegenüberliegenden Seiten des Schwenkarms 411 jeweils wenigstens ein Pneumatik-Element 401, 402 angeordnet ist; oder wobei das Betätigungselement linear entlang einer Betätigungsstrecke bewegbar angeordnet ist, wobei auf gegenüberliegenden Seiten des Betätigungselements jeweils wenigstens ein Pneumatik-Element angeordnet ist.

Ein neunter Aspekt betrifft die Luftkissenanordnung 100 nach einem der Aspekte 1 bis 4, wobei das Pulsationsmodul einen Zylinder 501 umfasst, in dessen Innenraum Pneumatik-Elemente 505-508 mit einem mit der Versorgungsleitung 151 druckausgeglichen verbundenen Innenraumvolumen konzentrisch angeordnet sind, wobei das Betätigungselement eine exzentrisch zum Zylinder 501 innerhalb des Zylinders angeordnete Walze 502 umfasst, wobei die Pneumatik-Elemente und das Betätigungselement derart angeordnet sind, dass eine exzentrische Bewegung der Walze 502 um die Längsachse 503 des Zylinders 501 das Innenraumvolumen der Pneumatik-Elemente 505-508 zum Beaufschlagen des Luftkissens 152 mit einer Pulsation verändern kann.

Ein zehnter Aspekt betrifft die Luftkissenanordnung 100 nach Aspekt 9, wobei eine Kontaktfläche zwischen der Walze 502 und den Pneumatik-Elementen 505-508 mit einem Schmiermittel beaufschlagt ist und/oder wobei die Pneumatik-Elemente 505-508 aus TPU-Folie bestehen oder die Kontaktfläche mit der Walze 502 TPU-Folie umfasst.

Ein elfter Aspekt betrifft die Luftkissenanordnung 100 nach Aspekt 9 oder 10, wobei eine Naht der Pneumatik- Elemente 505-508 mit der Achse des Zylinders 501 und/oder der Drehachse der Walze 502 einen Winkel einschließt.

Ein zwölfter Aspekt betrifft die Luftkissenanordnung 100 nach einem der Aspekte 9 bis 11, wobei die Walze 502 über ein Getriebe 602 mit einem Antriebselement 601 verbunden ist.

Ein dreizehnter Aspekt betrifft die Luftkissenanordnung 100 nach Aspekt 12, wobei das Antriebselement 601 ein Elektromotor ist und wobei eine Steuereinheit 160 vorgesehen ist, die den Elektromotor zum Steuern einer Drehfrequenz des Elektromotors ansteuern kann.

Ein vierzehnter Aspekt betrifft die Luftkissenanordnung 100 nach einem der Aspekte 1 bis 13, wobei:
die Luftkissenanordnung 100 ein Antriebselement für das Betätigungselement umfasst, wobei das Antriebselement ausgebildet ist, eine Pulsation mit einer Frequenz von 1 Hz bis 1000Hz oder 3Hz bis 100Hz oder 60Hz bis 80Hz oder zwischen 5 und 20Hz, insbesondere zwischen 5 und 15Hz, besonders bevorzugt zwischen 7 und 12Hz zu bewirken; und/oder
die Luftkissenanordnung 100 ausgebildet ist, eine Massagefunktion und/oder eine Entertainmentfunktion und/oder eine Line-Assist-Funktion und/oder eine Fahrspurwechselwarnfunktion zu realisieren.

Ein fünfzehnter Aspekt betrifft einen Sitz 130, etwa ein Fahrzeugsitz, umfassend eine Luftkissenanordnung 100 nach einem der Aspekte 1 bis 14 und optional ein Lordosestützsystem.

## Patentansprüche

1. Pulsationsmodul (500) mit einer Versorgungsleitung (151) für eine Luftkissenanordnung, wobei das Pulsationsmodul mehrere Pneumatik-Elemente (505-508) und ein Betätigungselement zum Übertragen einer mechanischen Bewegung auf das Pneumatik-Element zum Verändern des Volumens des Pneumatik-Elements (505-508) zur Erzeugung einer Pulsation umfasst, wobei das Pulsationsmodul einen Zylinder (501) umfasst, in dessen Innenraum Pneumatik-Elemente (505-508) mit einem mit der Versorgungsleitung (151) druckausgeglichen verbundenen Innenraumvolumen konzentrisch angeordnet sind, wobei das Betätigungselement eine exzentrisch zum Zylinder (501) innerhalb des Zylinders angeordnete Walze (502) umfasst, wobei die Pneumatik-Elemente und das Betätigungselement derart angeordnet sind, dass eine exzentrische Bewegung der Walze (502) um die Längsachse (503) des Zylinders (501) das Innenraumvolumen der Pneumatik-Elemente (505-508) zum Beaufschlagen der Versorgungsleitung (151) mit einer Pulsation verändern kann.

2. Pulsationsmodul (500) nach Anspruch 1, wobei eine Kontaktfläche zwischen der Walze (502) und den Pneumatik-Elementen (505-508) mit einem Schmiermittel beaufschlagt ist und/oder wobei die Pneumatik-Elemente (505-508) aus TPU-Folie bestehen oder die Kontaktfläche mit der Walze (502) TPU-Folie umfasst.

3. Pulsationsmodul (500) nach Anspruch 1 oder 2, wobei eine Naht der Pneumatik- Elemente (505-508) mit der Achse des Zylinders (501) und/oder der Drehachse der Walze (502) einen Winkel einschließt.

4. Pulsationsmodul (500) nach einem der Ansprüche 1 bis 3, wobei die Walze (502) über ein Getriebe (602) mit einem Antriebselement (601) verbunden ist.

5. Pulsationsmodul (500) nach Anspruch 4, wobei das Antriebselement (601) ein Elektromotor ist und wobei eine Steuereinheit (160) vorgesehen ist, die den Elektromotor zum Steuern einer Drehfrequenz des Elektromotors ansteuern kann.

## Claims

1. A pulsation module (500) with a supply line (151) for an air cushion assembly, wherein the pulsation module is provided with a plurality of pneumatic elements (505-508) and an actuating element for transmitting a mechanical motion to said pneumatic element for changing the volume of said pneumatic element in order to generate a pulsation, wherein said pulsation module comprises a cylinder (501), in the interior of which pneumatic elements (505-508) are arranged concentrically with an interior volume connected to said supply line (151) in a pressure-equalized manner, wherein said actuating element comprises a roller (502) within said cylinder arranged eccentrically relative to said cylinder (501), wherein said pneumatic elements and said actuating element are arranged such that an eccentric motion of said roller (502) about the longitudinal axis (503) of said cylinder (501) can change the interior volume of said pneumatic elements (505-508) for acting upon the supply line (151) with a pulsation.

2. The pulsation module (500) according to claim 1, wherein a contact surface between said roller (502) and said pneumatic elements (505-508) has a lubricant applied to it and/or said pneumatic elements (505-508) consist of TPU film or said contact surface to said roller (502) comprises TPU film.

3. The pulsation module (500) according to claim 1 or 2, wherein a seam of said pneumatic elements (505-508) forms an angle with the axis of said cylinder (501) and/or the axis of rotation of said roller (502).

4. The pulsation module (500) according to one of the claims 1 to 3, wherein said roller (502) is connected by way of a gear (602) to a drive element (601).

5. The pulsation module (500) according to claim 4, wherein said drive element (601) is an electric motor and wherein a control unit (160) is provided which can actuate said electric motor to control a rotational frequency of said electric motor.

## Revendications

1. Module de pulsation (500) avec une conduite d'alimentation (151) pour un agencement de coussin d'air, dans lequel le module de pulsation comprend plusieurs éléments pneumatiques (505-508) et un élément d'actionnement (122) pour transmettre un mouvement mécanique à l'élément pneumatique afin de modifier le volume de l'élément pneumatique pour générer une pulsation, dans lequel le module de pulsation comprends un cylindre (501), à l'intérieur duquel des éléments pneumatiques (505-508) sont disposés concentriquement avec un volume intérieur relié à la conduite d'alimentation (151) d'une manière équilibrée en pression, dans lequel l'élément d'actionnement comprend un rouleau (502) agencé excentriquement au cylindre (501) à l'intérieur du cylindre, les éléments pneumatiques et l'élément d'actionnement étant agencés de telle manière qu'un mouvement excentrique du rouleau (502) autour de l'axe longitudinal (503) du cylindre (501) peut modifier le volume intérieur des éléments pneumatiques (505-508) pour appliquer une pulsation à la conduite d'alimentation (151).

2. Module de pulsation (500) selon la revendication 1, dans lequel une surface de contact entre le rouleau (502) et les éléments pneumatiques (505-508) est chargée d'un lubrifiant et/ou dans lequel les éléments pneumatiques (505-508) sont constitués d'un film TPU ou la surface de contact avec le rouleau (502) comprend un film TPU.

3. Module de pulsation (500) selon la revendication 1 ou 2, dans lequel un joint des éléments pneumatiques (505-508) forme un angle avec l'axe du cylindre (501) et/ou l'axe de rotation du rouleau (502).

4. Module de pulsation (500) selon l'une quelconque des revendications 1 à 3, dans lequel le rouleau (502) est connecté via une transmission (602) avec un élément d'entraînement (601).

5. Module de pulsation (500) selon la revendication 4, dans lequel l'élément d'entraînement (601) est un moteur électrique et dans lequel une unité de commande (160) est prévue qui peut commander le moteur électrique pour commander une fréquence de rotation du moteur électrique.
